# EUROPÄISCHE PATENTANMELDUNG

(11) **EP 3 971 354 A1**
(43) Veröffentlichungstag der Anmeldung: **23.03.2022**
(21) Anmeldenummer: 21193762.8
(22) Anmeldetag: 30.08.2021
(51) Int. Cl.: E04B 1/00, E04C 5/03

(54) **BAUTEIL ZUM ANSCHLUSS EINER AUSKRAGENDEN BETONPLATTE**

(30) Priorität: 22.09.2020 CH 12022020
(71) Anmelder: Peikko Group Oy, 15101 Lahti (FI)
(72) Erfinder: Kahmer, Herbert, 63526 Erlensee (DE)
(74) Vertreter: reuteler & cie SA

(57) **Zusammenfassung**

Die Erfindung betrifft ein Bauteil zum Anschluss einer auskragenden Betonplatte, insbesondere Balkonplatte (24), an eine Betondecke (25), mit einem Isolierkörper (21) aus Kunststoffschaum und den Isolierkörper (21) durchsetzenden, einen länglichen Verbindungskörper aufweisenden Verbindungsteilen (3), die mit einem Ende (22) in die Betonplatte (24) und mit dem anderen Ende (23) in die Betondecke (25) eingegossen sind. Erfindungsgemäß weisen die Verbindungsteile (3) an den Enden jeweils eine Profilierung auf, durch die in Längsrichtung des Verbindungskörpers einander im Abstand gegenüberliegende Flächen (7,8;7c,12c) gebildet sind, welche das einbettende Material in entgegengesetzten Längsrichtungen hintergreifen.

## Beschreibung

Die Erfindung betrifft ein Bauteil zum Anschluss einer auskragenden Betonplatte, insbesondere Balkonplatte, an eine Betondecke, mit einem Isolierkörper aus Kunststoffschaum und den Isolierkörper durchsetzenden, einen länglichen Verbindungskörper aufweisenden Verbindungsteilen, die mit einem Ende in die Betonplatte und mit dem anderen Ende in die Betondecke eingegossen sind.

Durch Benutzung bekannte Bauteile solcher Art weisen neben horizontale Kräfte abtragenden Zugstäben und Drucklagern schräg zur Horizontalen verlaufende Verbindungsteile zum Abtragen von Querkräften auf.

Der Erfindung liegt die Aufgabe zugrunde, die Verankerung der Verbindungsteile in der Betonplatte bzw. Betondecke zu verbessern.

Dass diese Aufgabe lösende Bauteil nach der Erfindung ist dadurch gekennzeichnet, dass die Verbindungskörper an den Enden jeweils eine Profilierung aufweisen, durch die in Längsrichtung des Verbindungskörpers einander im Abstand gegenüberliegende Flächen gebildet sind, welche das einbettende Material in entgegengesetzten Längsrichtungen hintergreifen.

Vorteilhaft ist gemäß der Erfindung das Ende des Verbindungsteils im einbettenden Material der Betonplatte bzw -decke in Längsrichtung des Verbindungsteils festgelegt, indem bei Hin- und Herbewegungen des Verbindungsteils in dessen Längsrichtung abwechselnd den Flächen durch Formschluss eine Haltefunktion zukommt. Vorteilhaft reicht die Tiefe auf der Plattenfläche gebildeter Risse jeweils maximal nur bis an die Flächen heran, so dass sich zwischen den Flächen ein rissfreier Bereich ergibt.

Vorzugsweise sind die einander gegenüberliegenden Flächen zueinander geneigt oder erstrecken sich senkrecht zur Längsachse des Verbindungseils.

Die einander gegenüberliegenden Flächen können mindestens eine über den Umfang des Verbindungsteils durchgehende Ringfläche, die durch einen Ringvorsprung des Verbindungsteils gebildet ist, aufweisen, oder mindestens eine unterbrochene Ringfläche umfassen, die durch über den Umfang des Verbindungsteils verteilte Vorsprünge gebildet ist.

Insbesondere weist die Profilierung neben einem einzigen durchgehenden Ringvorsprung ausschließlich über den Umfang des Verbindungsteils verteilte Vorsprünge auf, oder es sind zwei in axialem Abstand zueinander angeordnete, eine Ringnut bildende Ringvorsprünge vorhanden.

Es versteht sich, dass die Fixierungswirkung durch die das einbettende Material hintergreifenden Ringflächen abnimmt, wenn der Abstand, mit dem sich die Ringflächen einander gegenüberliegen, gering wird. In einer bevorzugten Ausführungsform der Erfindung ist der Abstand zwischen den Ringflächen um ein Mehrfaches größer als die Breite der Ringflächen, insbesondere um ein Sechs- bis Achtfaches. Vorzugsweise handelt es sich bei den Ringflächen um Seitenflächen einer Ringnut, wobei die Breite bzw. die axiale Länge der Ringnut in Anbetracht einer Anwendung der Spritzgießtechnik um ein Mehrfaches größer als die auf einen der beiden Nutenränder bezogene Nutentiefe sein kann, insbesondere um ein Zehn- bis Zwölffaches.

Vorzugsweise sind die Verbindungsteile im Wesentlichen bolzenförmig mit kreisförmigem Querschnitt ausgebildet.

In weiterer vorteilhafter Ausgestaltung der Erfindung sind die Ringflächen zur Längsrichtung des Verbindungsteils geneigt und fallen insbesondere zu dem Boden der Ringnut hin ab. Durch Meidung eines scharfkantigen Übergangs zwischen Bolzenoberfläche und Nutenboden wird einer Rissbildung entgegengewirkt.

Die Ringflächen können durch eine Ausnehmung oder/und jeweils einen Ringvorsprung von einer zylindrischen Mantelfläche des bolzenförmigen Verbindungsteils gebildet sein.

In der bevorzugten Ausführungsform der Erfindung betrifft die Profilierung sowohl Änderungen des Durchmessers des Verbindungsteils als auch Änderungen der Querschnittsform.

So kann der Boden der Ringnut über den Umfang (insbesondere gleichmäßig) verteilte Erhebungen aufweisen, die in Längsrichtung des Verbindungsteils zu einer erheblichen Verstärkung des Reibschlusses zwischen einbettendem Material, insbesondere Beton, und dem Verbindungsteil führt.

Bei den Erhebungen kann es sich um Noppen handeln, die im Abstand von den Ringflächen angeordnet sind.

In einer Ausführungsform handelt es sich bei den Erhebungen um in axialer Richtung ausgedehnte Stege, die vorzugsweise an die Ringflächen angrenzen und bis zur Längsmitte der Stege hin ansteigende Rampen bilden.

Vorteilhaft kommt es durch die Noppen und/oder Erhebungen in dem rissfreien Bereich zu einer zusätzlichen Verkeilung zwischen dem Verbindungsteil und dem einbettenden Material.

Die Erfindung ist nachfolgend anhand von Ausführungsbeispielen und sich auf diese Ausführungsbeispiele beziehende Zeichnungen weiter erläutert. Es zeigen:
Fig. 1 eine Teilansicht eines erfindungsgemäßen Bauteils,
Fig. 2 eine Teilansicht eines Verbindungsteils nach der Erfindung für ein erfindungsgemäßes Bauteil, und
Fig. 3 und 4 Teilansichten weiterer erfindungsgemäßer Verbindungsteile für ein erfindungsgemäßes Bauteil.

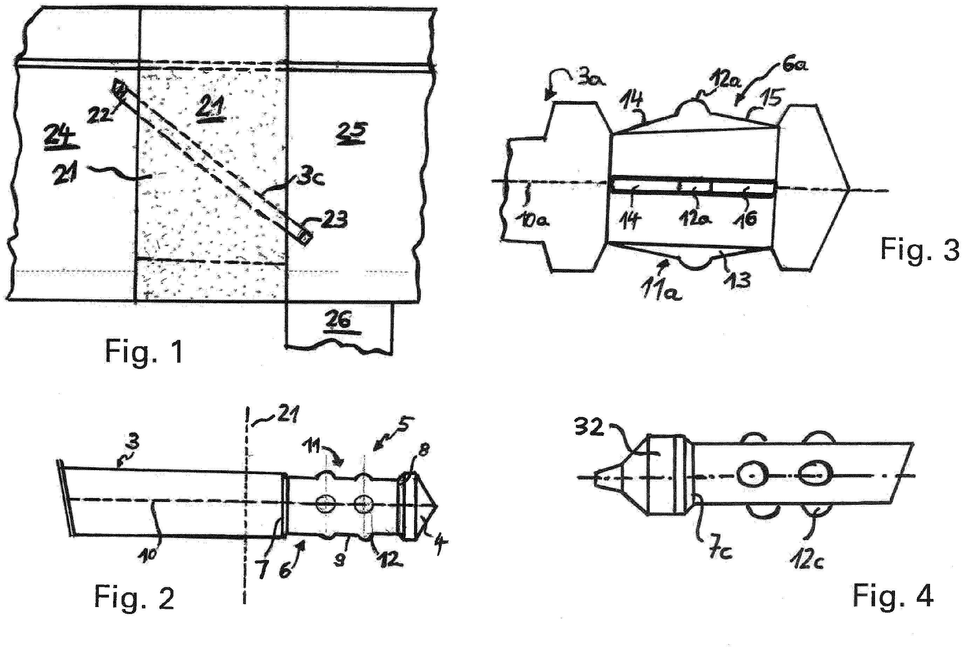

Fig. 1 zeigt ein längliches Verbindungsteil 3, dass einen Isolierkörper 21 aus Kunststoffschaum schräg durchsetzt und beidseitig mit einem Endstück 22 bzw. 23 in den Beton einer auskragenden Betonplatte 24 bzw. einer Betondecke 25 innerhalb eines Gebäudes hineinragt, wobei die Decke von einer Wand 26 abgestützt ist.

Bekanntermaßen sind in den Isolierkörper 21 in dessen unterem Bereich Drucklager und im oberen Bereich Zugstäbe zur Einbettung in die Platten 24, 25 vorgesehen.

Die Endstücke 22, 23 mit der in Fig. 1 nur angedeuteten Profilierung können wie nachfolgend beschrieben profiliert sein.

Die Profilierung des Längsabschnitts 5 des Verbindungsteils 3 von Fig. 2 betrifft sowohl Änderungen des Bolzendurchmessers als auch Änderungen der Form des Bolzenquerschnitts.

In dem gezeigten Beispiel umfasst der profilierte Längsabschnitt 5 des Verbindungsteils 3 eine Ringnut 6 mit Seitenflächen 7 und 8, die zum Boden 9 der Ringnut hin abfallen und mit der Zylinderachse 10 des bolzenförmigen Verbindungsteils 3 einen Winkel von ca. 70° einschließen.

Von dem Nutenboden 9 erstrecken sich Erhebungen bzw. Vorsprünge 11 in Form von Paaren von Noppen 12, die in Bezug auf eine Mittelebene des Längsabschnitts 5 symmetrisch angeordnet und gleichmäßig über den Umfang des Nutenbodens 9 verteilt sind. Insgesamt sind vier Paare von Noppen 12 gebildet.
Dem profilierten Längsabschnitt 5 kommt vor allem bei dynamischen Belastungen des Bauteils, wie sie bei einem Erdbeben auftreten, besondere Bedeutung zu. Insbesondere wirkt diese Profilierung einer von dem eingebetteten Ende des Verbindungsteils 3 ausgehenden, die Stabilität der Einbettung beeinträchtigenden Rissbildung im Beton entgegen.

Eine stabile Verbindung zwischen der Betonplatte 24 bzw. -decke 25 und dem Verbindungsteil 3 durch Formschluss wird vor allem dadurch erreicht, dass die Breite der Ringnut 6, d.h. deren axiale Länge, um ein Mehrfaches größer als die Tiefe der Ringnut 6 bzw. die Breite der Seitenflächen 7,8 ist. Die axiale Scherbelastung des Betons bei Hin- und Herbewegung des Verbindungsteils 3 in axialer Richtung verteilt sich damit auf eine größere Länge.

Einer solchen Belastung entgegen wirkt ferner ein erhöhter Reibschluss zwischen dem Beton und dem Nutenboden 9, der durch die Paare von Noppen 12 erreicht wird. Die Noppen 12, die in dem gezeigten Beispiel bündig mit der Zylinderoberfläche des bolzenförmigen Verbindungsteils 3 abschließen, erhöhen vorteilhaft nicht nur den Reibschluss in axialer Richtung, sondern wirken auch einer Drehung des Verbindungsteils um die Zylinderachse 10 relativ zum Beton entgegen.

Ein in Fig. 3 gezeigtes Ausführungsbeispiel für ein Verbindungsteil 3a unterscheidet sich von dem vorangehenden Ausführungsbeispiel dadurch, dass der Boden 9a einer Ringnut 6a nicht nur Noppen, sondern Erhebungen 11a mit Noppen 12a und jeweils einem dachartigen Steg 13 mit zu den Noppen 12a in entgegengesetzten Richtungen ansteigenden Rampen 14 und 15 aufweist. In dem gezeigten Ausführungsbeispiel sind vier gleichmäßig um die Zylinderachse 10a verteilt angeordnete solche Erhebungen 11a vorgesehen, die bis an die Seitenflächen 7,8 heranreichen. Ferner ist im Unterschied zu dem Ausführungsbeispiel von Fig. 2 die Ringnut 6a an beiden Nutenrändern durch einen sich über den Bolzendurchmesser erhebenden Ringvorsprung gebildet. Es versteht sich, dass der Bolzendurchmesser im Nutenbereich größer, kleiner oder gleich dem Durchmesser des an den inneren Ringvorsprung angrenzenden Bolzenabschnitts sein kann.

Die Erhebungen 11a mit den Noppen 12a und den Rampen 14,15 verbessern erheblich den Reibschluss in axialer Richtung, indem bei axialer Hin-und Herbewegung des Verbindungsteils 3 relativ zum einbettenden Material der Beton jeweils rampenaufwärts zusammengepresst wird.

Fig. 4 zeigt ein ggf. aus GFK-Material herstellbares Verbindungsteil das an den Enden jeweils einen Ringvorsprung 32 aufweist. Dem Ringvorsprung 32 mit einer zur Längsachse des Verbindungsteils geneigten Ringfläche 7c folgen im Abstand zu der Ringfläche angeordnete Noppen 12c auf, wobei zwei ringförmige Noppenanordnungen mit jeweils vier Noppen in axialem Abstand zueinander angeordnet sind.

Auch die in Fig. 4 gezeigte, in den Beton der Platten 24, 25 einzubettende Profilierung hat bei wechselnder axialer Belastung der Verbindungsteile die oben beschriebene Wirkung.

## Patentansprüche

1. Bauteil zum Anschluss einer auskragenden Betonplatte, insbesondere Balkonplatte (24), an eine Betondecke (25), mit einem Isolierkörper (21) aus Kunststoffschaum und den Isolierkörper (21) durchsetzenden, einen länglichen Verbindungskörper aufweisenden Verbindungsteilen (3), die mit einem Ende (22) in die Betonplatte (24) und mit dem anderen Ende (23) in die Betondecke (25) eingegossen sind,
**dadurch gekennzeichnet,**
**dass** die Verbindungskörper an den Enden(22,23) jeweils eine Profilierung aufweisen, durch die in Längsrichtung des Verbindungskörpers einander im Abstand gegenüberliegende Flächen (7,8;7c,12c) gebildet sind, welche das einbettende Material in entgegengesetzten Längsrichtungen hintergreifen.

2. Bauteil nach Anspruch 1,
**dadurch gekennzeichnet,**
**dass** die einander gegenüberliegenden Flächen(7,8; 7c,12c) zueinander geneigt sind oder sich senkrecht zur Längsachse des Verbindungsteils erstrecken.

3. Bauteil nach Anspruch 1 oder 2,
**dadurch gekennzeichnet,**
**dass** die einander gegenüberliegenden Flächen mindestens eine über den Umfang des Verbindungsteils durchgehende Ringfläche (7,8), die durch einen Ringvorsprung des Verbindungsteils gebildet ist, oder mindestens eine unterbrochene Ringfläche umfassen, die durch über den Umfang des Verbindungsteils verteilte Vorsprünge (12c) gebildet ist.

4. Bauteil nach einem der Ansprüche 1 bis 3,
**dadurch gekennzeichnet,**
**dass** die Profilierung neben einem einzigen durchgehenden Ringvorsprung (32) ausschließlich über den Umfang des Verbindungsteils verteilte Vorsprünge (12c) aufweist oder zwei in axialem Abstand zueinander angeordnete, eine Ringnut (6) bildende Ringvorsprünge aufweist.

5. Bauteil nach Anspruch 4,
**dadurch gekennzeichnet,**
**dass** Erhebungen (11) von einer Bodenfläche (9) der Ringnut (6) vorstehen.

6. Bauteil nach einem der Ansprüche 3 bis 5,
**dadurch gekennzeichnet.**
**dass** der Abstand zwischen den Ringflächen (7,8) um ein mehrfaches, insbesondere ein sechs- bis achtfaches, größer als die jeweilige Breite der Ringfläche (7,8) ist.

7. Bauteil nach einem der Ansprüche 1 bis 6,
**dadurch gekennzeichnet,**
**dass** die Profiliierung sowohl Änderungen des Durchmessers als auch Änderungen der Querschnittsform des Verbindungsteils (3) betrifft.

8. Bauteil nach einem der Ansprüche 3 bis 7,
**dadurch gekennzeichnet,**
**dass** die Erhebungen (11) in axialem Abstand zu den Ringflächen (7,8) angeordnete Noppen (12) sind.

9. Bauteil nach einem der Ansprüche 3 bis 8,
**dadurch gekennzeichnet,**
**dass** die Erhebungen (11) sich in axialer Richtung erstreckende Stege (13) umfassen.

10. Bauteil nach Anspruch 9,
**dadurch gekennzeichnet,**
**dass** die Stege (13) unter Bildung von Rampen (14,15) zu ihrer Längsmitte hin ansteigen und insbesondere an die Ringflächen (7,8) angrenzen.
